# EUROPEAN PATENT SPECIFICATION

(11) **EP 3 569 511 B1**
(45) Date of publication and mention of the grant of the patent: **23.12.2020**
(21) Application number: 18382335.0
(22) Date of filing: 16.05.2018
(51) Int. Cl.: B65B 55/20, B65B 51/14, B65B 7/28, B65B 41/18, B65B 41/14, B65B 7/16, B29C 65/78, B29C 65/00, B65B 61/06, B65B 41/02, B29C 69/00, B65B 31/04, B29C 51/26

(54) **PACKAGING METHOD AND MACHINE**
VERPACKUNGSVERFAHREN UND VERPACKUNGSMASCHINE
MACHINE D' EMBALLAGE ET PROCÉDÉ

(43) Date of publication of application: 20.11.2019
(73) Proprietor: Ulma Packaging Technological Center, S.Coop., 20560 Guipuzcoa (ES)
(72) Inventor: IZQUIERDO EREÑO, Eneko, 20560 OÑATI (ES); AZKARGORTA AZKARATE, Ander, 20560 OÑATI (ES)
(74) Representative: Igartua, Ismael

(56) References cited:
- EP-A1- 3 023 339
- WO-A1-2016/055599

## Description

### TECHNICAL FIELD

The present invention relates to packaging methods and machines.

### PRIOR ART

It is common to use cardboard or plastic trays, for example, for packaging foods or products of another type. The product to be packaged is arranged on the trays, and the tray is covered with a film which is sealed to the tray by means of applying heat, for example, a container comprising a tray and a cover generated from a film thereby being obtained. This type of packaging is done in a specific type of packaging machines, such as heat-sealing packaging machines.

In machines of this type, the product to be packaged is placed in a rigid or semi-rigid support (a tray). The machine comprises a sealing station with a lower tool suitable for supporting at least one tray (generally a plurality of trays), and an upper tool which comprises one sealing tool per tray and cooperates with the lower tool to seal the film arranged between both tools to the trays supported by the lower tool. In a first operative position, the tools are separated from one another and the sealing station is open, and in a second operative position, the tools are in contact and the sealing station is closed.

For example, EP3023339A1 belonging to the current applicant discloses machines of this type. The machine disclosed in this document comprises a device for collecting surplus film once the film has gone through the sealing station, said surplus film then being disposed of.

GB2451837A discloses a machine of this type, but it lacks the device for collecting surplus film given that the machine has been configured to prevent, or at least reduce, the generation of residual film waste. In a sealing station, a continuous film is sealed to a plurality of trays, and the film between every two trays is cut. This leaves the film adhered to the tray further upstream in the sealing station. Said tray (and other trays that are in a line upstream of said tray) is then caused to move forward, and the mentioned sealing and cutting are again performed. A film surplus is thereby prevented, but at the cost of reducing productivity and/or increasing machine size, given that two sealing operations are applied on one and the same tray (the tray causing the movement of the film with its movement, i.e., the tray further upstream in the first sealing and cutting operation, and the tray further downstream in the following sealing and cutting operation), one less container being obtained after each sealing and cutting operation.

WO2014/091504A1 also discloses a machine of this type configured for preventing, or at least reducing, the generation of residual film waste. The machine comprises a sealing station comprising an upper tool and a lower tool, and a positioning station upstream of the sealing station, where a film segment is positioned above a holding tool arranged in said positioning station. With the film segment thus arranged on the holding tool, the film segment is held, said film segment is cut to generate as many pieces of film as there are (or will be) trays in the sealing station and the pieces of film are separated from one another, each piece of film being separated from the rest of the pieces and held by the holding tool. The holding tool then introduces the pieces of film into the sealing station, and transfers said pieces of film arranged on the holding tool to the upper tool of the sealing station, such that when the holding tool is removed, the pieces of film are held with the upper tool of the sealing station. Additionally, in an introduction operation the trays are introduced into the sealing station, arranging them on the lower tool of the sealing station, and then in a sealing operation, said pieces of film arranged in the upper tool of the sealing station are sealed to the corresponding trays arranged on the lower tool of the sealing station. The size of the pieces is adjusted to the size of the cover required for the trays, such that film waste is prevented or the amount of film wasted is reduced. Making the cuts and introducing the pieces of film separated from one another into the sealing station requires a sealing station sized for storing said pieces of film separated from one another with the corresponding trays also separated from one another and very precise synchronization to assure the correct arrangement of said pieces of film in the upper tool of the sealing station. Additionally, the sealing station also requires a separation between the upper tool and the lower tool that is sufficient to allow the introduction of the holding tool with the pieces of film, on one hand, and of the trays, on the other hand, before performing the sealing operation.

EP3272658A1 seeks to solve at least part of these drawbacks by avoiding making any cuts on the film upstream of the sealing station, such that the continuous film is introduced into the sealing station by means of a gripper holding one end of said continuous film and driving it until a film segment is arranged in said sealing station. Once the film segment is thus arranged, it is held on the upper mold of the sealing station. On the other hand, the trays are independently introduced into the sealing station and the corresponding sealing of the film to the trays arranged in the sealing station is then performed, and the required cuts are made on the film segment to obtain independent containers formed by a tray and a piece of film sealed thereto. At some point, with the sealing molds open, the gripper returns to its original position to grip an end of the continuous film generated upstream of the sealing station after the mentioned sealing and cutting.

### DISCLOSURE OF THE INVENTION

The object of the invention is to provide a packaging method and machine as defined in the claims.

A first aspect of the invention relates to a method for a packaging machine, comprising a sealing operation carried out in a sealing station of the machine, in which a film segment is sealed to a set of trays arranged in the sealing station and comprising at least one row formed by a plurality of trays arranged one after another in a longitudinal direction of the machine, such that individual hermetically sealed containers are generated after the sealing operation. Each container comprises a tray and a film cover.

Before performing the sealing operation, the method further comprises:
- arranging the set of trays in a positioning area of the machine, the tray further downstream in said longitudinal direction being the first tray and the tray further upstream in said longitudinal direction being the last tray,
- arranging in the positioning area a film segment obtained from a continuous film and comprising specific dimensions, said film segment comprising a first length in the longitudinal direction equal to or greater than the length of the set of trays in said longitudinal direction, and a second length in a transverse direction with respect to the longitudinal direction, which is substantially equal to the length of the set of trays in said transverse direction,
- fixing the film segment to at least said first tray in a fixing operation, and
- after the fixing operation or during said fixing operation, introducing the film segment together with the set of trays into the sealing station in an introduction step.

The advantage of using only the amount of film required for generating the containers is maintained and shorter cycle times are achieved with the proposed method, resulting in improved productivity. By introducing the film segment together with the set of trays into the sealing station in an introduction step, said shortened cycle times is achieved by preventing any other additional operation for arranging the film segment independently inside the sealing station, for transferring said film segment to the upper tool of the sealing station once it is introduced into the station, for ejecting the element with which the film of the sealing station has been introduced, as described in the prior art, thereby reducing the number of required operations and increasing the speed of each packaging cycle. Furthermore, the additional elements used for arranging the film in the sealing station are eliminated with the method, such that the required space between an upper tool and a lower tool of the sealing station is demarcated only by the height of the trays, where it can be reduced with respect to the prior art. This allows having machines in which said method is implemented that are quicker, more compact, and have fewer elements, given that the tools intervening in the sealing operation are closer to one another. Furthermore, no additional element is required in the sealing station for keeping the film segment held against the upper tool, no additional mechanisms are required for moving the film to the sealing station, and no mechanisms are required for separating the pieces of film from one another, which allows making the machine simpler, achieving cost reduction, and reducing maintenance tasks in said machine.

A second aspect of the invention relates to a packaging machine comprising:
- a sealing station configured for receiving a set of trays comprising at least one row formed by a plurality of trays arranged one after another in a longitudinal direction, for receiving a film segment substantially covering said set of trays, and for sealing the film segment to the set of trays, individual hermetically sealed containers thereby being generated, and each container comprising a tray and a film cover, and
- an introduction tool for introducing the set of trays into the sealing station in the longitudinal direction.

The machine further comprises:
- a positioning area upstream of the sealing station where the set of trays is positioned, the tray of the set of trays further downstream in said longitudinal direction being the first tray and the tray further upstream in said longitudinal direction being the last tray,
- a positioning device upstream of the sealing station in the longitudinal direction, which is suitable and configured for positioning a first end of the film segment, which is the transverse segment further downstream in the longitudinal direction, in a specific final position in the positioning area, and
- a fixing device configured for fixing the film segment to at least said first tray in the positioning area, such that the introduction tool introduces the film segment together with the set of trays into the sealing station.

At least the same advantages that have already been mentioned for the method are obtained with the machine of the invention.

These and other advantages and features of the invention will become evident in view of the drawings and the detailed description of the invention.

### DESCRIPTION OF THE DRAWINGS

Figure 1 schematically shows a preferred embodiment of the packaging machine of the invention.
Figure 2 schematically shows the machine of Figure 1, with a tray in a positioning area of said machine.
Figure 3 schematically shows the machine of Figure 1, with two trays in the positioning area of said machine.
Figure 4 schematically shows the machine of Figure 1, with a set of trays in the positioning area of said machine and with the film segment cut with respect to the continuous film.
Figure 5 shows a plan view of a set of trays arranged in the positioning area of the machine of Figure 1.
Figure 6 shows a plan view of the set of trays of Figure 5, with a film segment arranged thereon.
Figure 7 schematically shows the machine of Figure 1, with the film segment arranged on the set of trays.
Figure 8 shows an introduction tool holding the set of trays in the positioning area of the machine of Figure 1, and with the film segment and the set of trays aligned with one another.
Figure 9 shows the introduction tool holding the set of trays in the positioning area of the machine of Figure 1, and with the film segment being fixed to the set of trays.
Figure 10 schematically shows the machine of Figure 1, after having introduced the film segment and the set of trays together into the sealing station of said machine.
Figure 11 shows a plan view of a positioning device of the machine of Figure 1.
Figure 12 shows a perspective view of the introduction tool of the machine of Figure 1, in the open position.

### DETAILED DISCLOSURE OF THE INVENTION

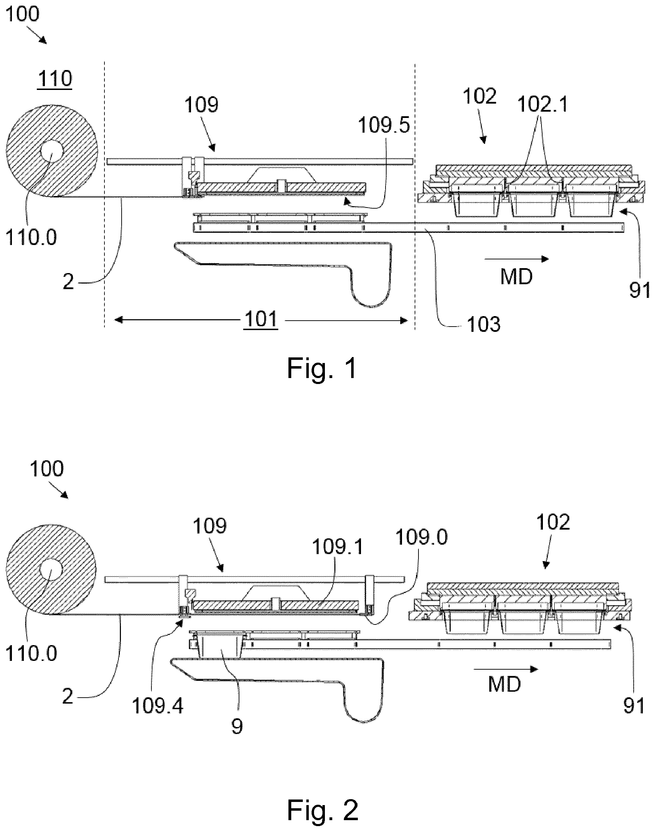

A first aspect of the invention relates to a method for a packaging machine 100 such as the one schematically shown by way of example in Figure 1. The machine 100 comprises a feeding station 110 from which there is fed a continuous film 2, which initially is preferably wound in reel form around of a reel holder 110.0, a positioning area 101 where there are positioned trays 9 from which the final containers are generated, and a sealing station 102 where the film is sealed to the containers.

The method comprises arranging a set of trays 91 comprising at least one row formed by a plurality of trays 9 arranged one after another in a longitudinal direction MD of the machine 100, in a positioning area 101 of the machine 100. In a preferred embodiment, the trays 9 are arranged one by one in the positioning area 101, as shown in the sequence of Figures 2 to 4. A set of trays 91 may comprise a plurality of rows arranged in parallel, although in the example shown in the drawings a set of trays 91 is formed by a single row which further comprises three trays 9.

The first tray 9F of the set of trays 91 is hereinafter referred to as the tray 9 further downstream in the longitudinal direction MD, and the last tray 9L of the set of trays 91 is hereinafter referred to as the tray 9 further upstream in the longitudinal direction MD.

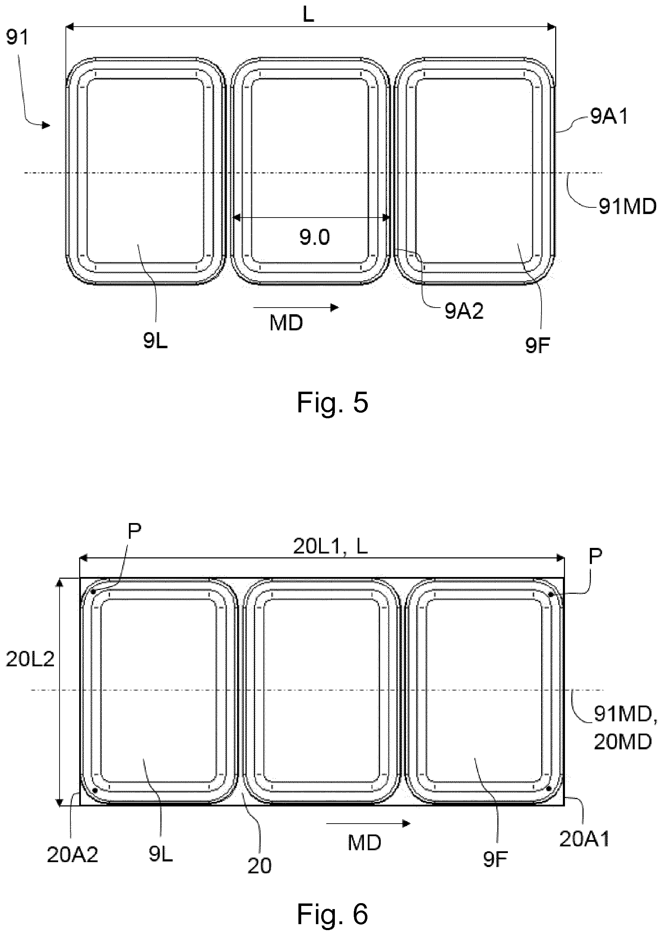

Naturally, if there were a plurality of rows, since the rows are parallel to one another with respect to the longitudinal direction MD, the first tray 9F could be the tray 9 further downstream in the longitudinal direction MD of any of the rows, and the last tray 9L could be the tray 9 further upstream in the longitudinal direction MD of any of the rows. Each tray 9 further comprises a specific length 9.0 in the longitudinal direction MD when the set of trays 91 is arranged in the positioning area 101, which is demarcated between a first edge 9A1 and a second edge 9A2 that are substantially transverse to said longitudinal direction MD, the first edge 9A1 being the edge of the corresponding tray 9 further downstream in said longitudinal direction MD and the second edge 9A2 being the edge of the corresponding tray 9 further upstream in said longitudinal direction MD, as depicted Figure 5. The set of trays 91 comprises a length L substantially equal to or greater than the sum of the length 9.0 of the trays 9 of the set of trays 91 in the longitudinal direction MD, the trays 9 of the set of trays 91 preferably being aligned side-by-side with minimum sufficient space therebetween to allow generating independent containers as described below.

The method further comprises arranging in the positioning area 101 a film segment 20 obtained from a continuous film 2 and comprising specific dimensions, said film segment 20 comprising a first length 20L1 in the longitudinal direction MD equal to or greater than the length L of the set of trays 91 in said longitudinal direction MD, and a second length 20L2 in a transverse direction with respect to the longitudinal direction MD, which is substantially equal to the length L of the set of trays 91 in said transverse direction, as depicted Figure 6. The first length 20L1 is measured from the first end 20A1 transverse to the longitudinal direction MD and is the length of said film segment 20 in said longitudinal direction MD (or in the opposite direction), the first end 20A1 being the end of the film segment 20 further downstream in said longitudinal direction MD.

The order of arrangement in the positioning area 101 is non-limiting, where the set of trays 91 can first be arranged, the film segment 20 can first be arranged, or both the trays 91 and film segment 20 can be arranged simultaneously, for example.

The film segment 20 is used for covering the trays 9, covering said trays 9 like a cover 90, as described in detail below. The method further comprises performing a sealing operation in which the film segment 20 is sealed to each tray 9 of the set of trays 91 in a sealing station 102 of the machine 100, such that a plurality of hermetically sealed independent containers are generated, each container being formed by a tray 9 and a film cover 90. The required cuts are made on the film segment 20 before, during, or after the sealing operation, giving rise to the independent containers.

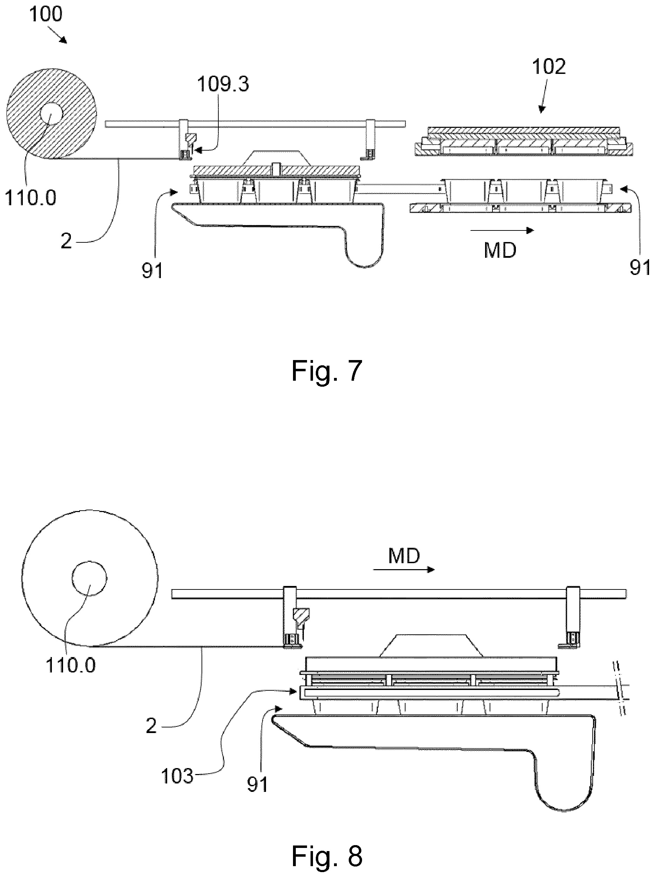

Furthermore, in the method, before performing the sealing operation, the film segment 20 is fixed to at least the first tray 9F in a fixing operation (Figures 7 to 9), and after the fixing operation or during said fixing operation, the film segment 20 is introduced together with the set of trays 91 into the sealing station 102 in an introduction step to then perform the sealing operation. The fixing operation thereby starts with the set of trays 91 in the positioning area 101, and can be completed with said set of trays 91 being in said positioning area 101 or as said set of trays 91 is introduced into the sealing station 102.

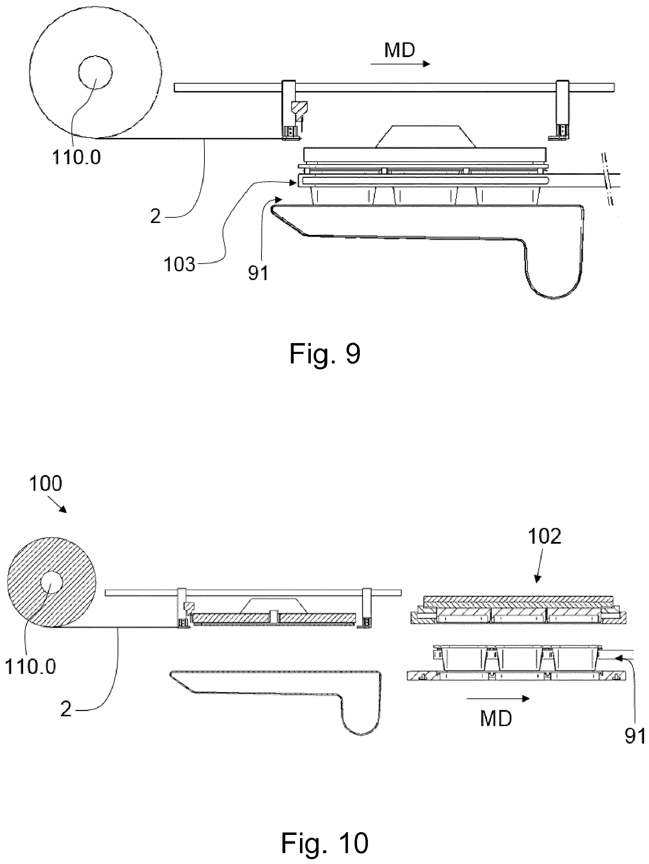

A pre-sealing of the film segment 20 to an overlapping area of the first tray 9F is preferably performed in the fixing operation in at least one point P, preferably on the edge or the overlap of said first tray 9F. The pre-sealing is performed before the introduction step or during said introduction step (see Figure 9).

Furthermore, in the method, the first end 20A1 of the film segment 20 and the first edge 9A1 of the first tray 9F of the set of trays 91 (Figure 7 and 8) are aligned with one another in an aligning operation before performing the fixing operation and in the positioning area 101, such that the first edge 9A1 of said first tray 9F and the first end 20A1 of said film segment 20 are substantially aligned vertically with one another. An arrangement step and an adjustment step are preferably performed in said aligning operation (see Figures 7 and 8).

In the arrangement step, at least the first end 20A1 of the film segment 20 is arranged on the first tray 9F of the set of trays 91, preferably contacting said first tray 9F. In the adjustment step, the position of at least the first tray 9F with respect to at least said first end 20A1 of the film segment 20 is adjusted so that the first edge 9A1 of said first tray 9F and said first end 20A1 of the film segment 20 are substantially aligned vertically with and overlapping one another.

The chronological order of the steps within the aligning operation is not relevant, and the steps may even take place simultaneously.

The film segment 20 therefore covers at least the first tray 9F of the set of trays 91 upstream of the sealing station 102 after the aligning operation. Furthermore, during the fixing operation or after the fixing operation, since the film segment 20 is held on at least the first tray 9F of the set of trays 91, the film segment 20 and the set of trays 91 are introduced together into the sealing station 102 (see Figure 10), for performing the sealing operation.

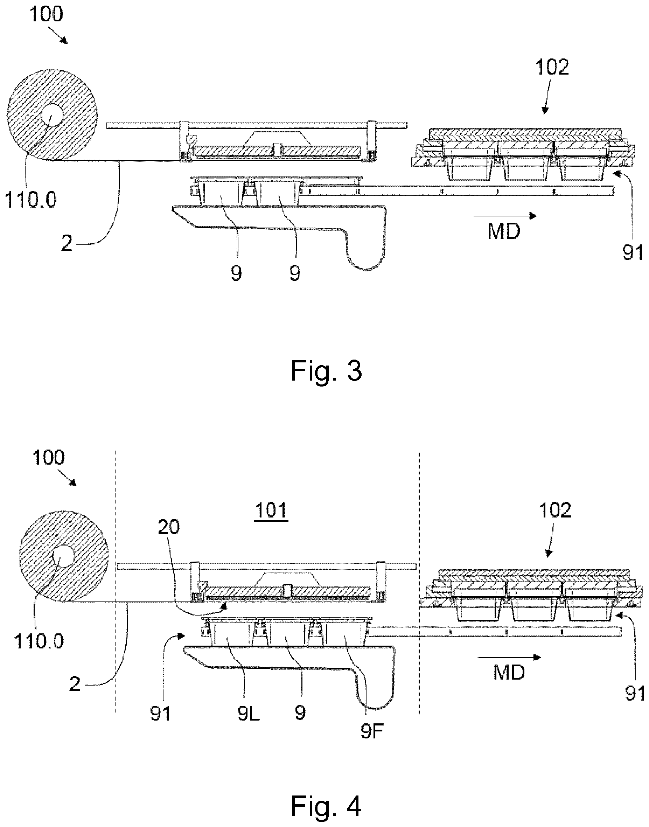

In the preferred embodiment, the film segment 20 is separated from the continuous film 2 by means of a cut on said film 2 before the fixing operation (cut depicted in Figure 4). The film segment 20 therefore comprises a second end 20A2 opposite the first end 20A1, which is the transverse end of the film segment 20 further upstream in the longitudinal direction MD. The cut is made such that the film segment 20 comprises a first length 20L1 in the longitudinal direction MD substantially equal to the length L of the set of trays 91 in said longitudinal direction MD. The first length 20L1 is demarcated by the first end 20A1 and the second end 20A2 of the film segment 20.

Furthermore, in the preferred embodiment, in the alignment step, at least the second end 20A2 of the film segment 20 is arranged on the last tray 9L of the set of trays 91, and the position of at least said last tray 9L is adjusted with respect to at least said end 20A2 of the film segment 20, such that the second edge 9A2 of said last tray 9L and said second end 20A2 of the film segment 20 are substantially aligned vertically with and overlapping one another, and the central axes 91 MD and 20MD of the set of trays 91 and of the film segment 20 extending in the longitudinal direction MD are substantially aligned vertically with one another. In the fixing operation, the film segment 20 is also fixed to said last tray 9L, and the set of trays 91 and the film segment 20 are thereby introduced into the sealing station 102 for the subsequent sealing operation. Fixing is preferably performed by means of the pre-sealing of the film segment 20 to the last tray 9L in at least one point P, such that the film segment 20 is at least held on the first tray 9F and the last tray 9L, and it is performed before the introduction step or during said introduction step (and preferably simultaneously with the pre-sealing in the first tray 9F).

So by cutting the film segment 20, a film segment 20 with dimensions that suit the set of trays 91 to be covered can be used, which allows using only the amount of film required for generating the containers, without residual waste of film 2 being generated.

In the preferred embodiment, a cutting step is performed in the sealing station 102 during the sealing operation, in which the film segment 20 arranged in said sealing station 102 is cut only between every two adjacent trays 9, individual containers thereby being obtained. By introducing into the sealing station 102 the film segment 20 that has a size substantially equal to the size of the set of trays 91 and has previously already been physically separated from the continuous film 2, these cuts are enough to obtain the containers, so it is unnecessary, for example, to make a cut upstream of the last tray 9L in said cutting step, thereby further simplifying the sealing station 102 (since no cutting blade is required at the inlet thereof).

In other embodiments, before the introduction step the film segment 20 is cut into a plurality of pieces of film upstream of the sealing station 102, each piece of film being associated with a corresponding tray 9 of the set of trays 91, and each piece of film thereby comprising dimensions that suit the corresponding tray 9. In this case, as a result of said cut a piece of film is obtained for each tray 9 of the set of trays 91, the film segment 20 thereby being formed by a plurality of pieces of film physically separated from one another. In the aligning operation, at least the edge 9A1 further downstream of each tray 9 of the set of trays 91 and the end further downstream of a piece of corresponding film are vertically aligned with one another. In the fixing operation, each piece of film is fixed to its corresponding tray 9, preferably by means of a pre-sealing of at least one point P of the piece of film to the corresponding tray 9 like those mentioned above, the film segment 20 (the pieces of film) thereby being introduced together with the set of trays 91 into the sealing station 102 in the introduction step. Each piece of film comprises a length substantially equal to the length of the corresponding tray 9 in the longitudinal direction MD, such that no film is wasted. The pieces of film and the set of trays 91 are thereby introduced into the sealing station 102 together, fixed to one another.

For those embodiments requiring it, the method further comprises a treatment step which is performed before the sealing operation and with the set of trays 91 and the film segment 20 arranged in the sealing station 102. In said treatment step, air is extracted from the space comprised between the film segment 20 and the set of trays 91 (or from the space comprised between each piece of film and its associated tray 9) and/or a gas is introduced into said space through at least one area that is not fixed in the fixing operation. The sealing operation (and the cutting step, if any) is performed once the treatment step has been performed.

A second aspect relates to a packaging machine 100. The machine 100 comprises:
- a sealing station 102 configured for receiving a set of trays 91 comprising at least one row formed by a plurality of trays 9 arranged one after another in a longitudinal direction MD, for receiving a film segment 20 substantially covering said set of trays 91, and for sealing the film segment 20 to the set of trays 91, individual hermetically sealed containers thereby being generated, each container comprising a tray 9 and a film cover 90, and
- an introduction tool 103 for introducing the set of trays 91 into the sealing station 102 in the longitudinal direction MD.

The machine 100 further comprises:
- a positioning area 101 upstream of the sealing station 102 where the set of trays 91 is positioned, the tray 9 of the set of trays 91 further downstream in said longitudinal direction MD being the first tray 9F and the tray 9 further upstream in said longitudinal direction MD being the last tray 9L,
- a positioning device 109 upstream of the sealing station 102 in the longitudinal direction MD which is suitable and configured for positioning a first end 20A1 of the film segment 20, which is the transverse segment further downstream in the longitudinal direction MD, in a specific final position in the positioning area 101, and
- a fixing device configured for fixing the film segment 20 to at least said first tray 9F in the positioning area 101, such that the introduction tool 103 introduces the film segment 20 together with the set of trays 91 into the sealing station 102.

In a preferred embodiment of the machine 100, the fixing device comprises at least one welder 108.1 suitable for welding at least one point P of the film segment 20 to the edge or the overlap of the first tray 9F for fixing said film segment 20 to said first tray 9F, preferably on the edge or in the overlap of said first tray 9F.

The positioning device 109 comprises a drive tool 109.0 and at least one head 109.1, the drive tool 109.0 being configured for moving the continuous film 2 in the longitudinal direction MD, for arranging the film segment 20 in a first position in the positioning area 101, under the head 109.1 (opposite a support surface 109.5 of said head 109.1). The head 109.1 is configured for being moved vertically and for arranging, with said movement, the film segment 20 in a second position in said positioning area 101. The first end 20A1 of the film segment 20 is in its final position when said film segment 20 is in said second position.

In the preferred embodiment, the machine 100 comprises at least one cutting device 109.3 upstream of the positioning device 109 in the longitudinal direction MD, which is configured for cutting the film 2 such that it physically separates the film segment 20 from the continuous film 2 and which can be manipulated as required. The machine 100 further comprises a retaining device 109.4 upstream of the cutting device 109.3 in the longitudinal direction MD, configured for holding the end of the continuous film 2 generated after the cut made by said cutting device 109.3, such that the film 2 is arranged in a specific position to enable subsequently obtaining a new film segment 20 in a simple manner.

In the preferred embodiment, the positioning device 109 comprises a drive tool 109.0 movable in the longitudinal direction MD, i.e., in the forward movement direction of the trays 9 and in the opposite direction, and a head 109.1.

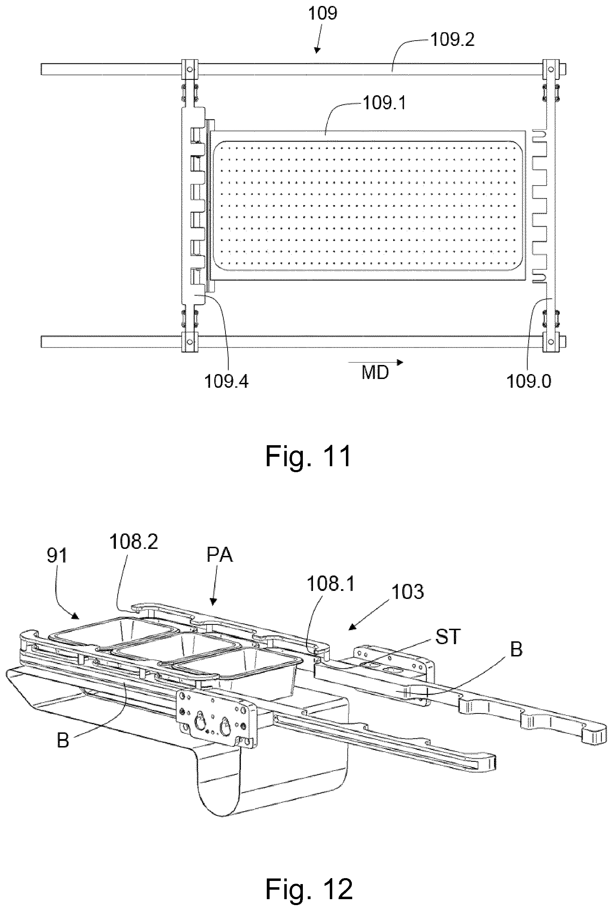

The machine 100 comprises a structure 109.2 allowing the movement of the drive tool 109.0. The drive tool 109.0 and the retaining device 109.4 comprise complementary configurations, such that while the retaining device 109.4 keeps hold of the continuous film 2, the drive tool 109.0 can hold said film 2 in areas not held by the retaining device 109.4. That is particularly advantageous when holding the continuous film 2 with the drive tool 109.0, given that in order to assure proper holding, it is preferable for said continuous film 2 to also be held by the retaining device 109.4 at that time, thereby assuring its position. In the preferred embodiment, the retaining device 109.4 comprises a series of clamps spaced apart from one another like a comb (see Figure 11), for example, and the drive tool 109.0 comprises a gripper with a configuration also like a comb, such that the clamps of the drive tool 109.0 fit into the gaps of the retaining device 109.4 arranged between the clamps of said retaining device 109.4.

The gripper is configured for gripping the first end 20A1 of the film segment 20 downstream of the head 109.1 in the longitudinal direction MD, and a movement device of the drive tool 109.0 is suitable for longitudinally moving said gripper below the support surface 109.5 of the head 109.1 in the longitudinal direction MD to its first position. The support surface 109.5 is thereby arranged opposite the film segment 20 when it is in its first position, and the head 109.1 comprises suction means configured for suctioning the film segment 20 against said support surface 109.5 which act (controlled by the control device) when said film segment 20 is in said first position. With the suction, the film segment 20 remains held with respect to the head 109.1, at least until the suction is interrupted.

As mentioned, the head 109.1 is furthermore configured and suitable for enabling the vertical movement thereof, such that the film segment 20 can be arranged in the required position in the positioning area 101 (its second position, and the final position of its first end 20A1) for subsequent fixing to the set of trays 91. This movement is preferably performed with the film segment 20 held on the support surface 109.5 of the head 109.1 by means of suction.

The machine 100 preferably further comprises an adjustment device configured for adjusting the position of at least the first edge 9A1 of the first tray 9F of the set of trays 91, said first edge 9A1 being in a specific final position in the positioning area 101 after the adjustment, such that said first edge 9A1 and the first end 20A1 of the film segment 20 are substantially aligned vertically when they are both in their respective final position in the positioning area 101, and a control device configured for causing the coordinated actuation of the positioning device 109, the adjustment device, and the fixing device, so that the first end 20A1 of the film segment 20 and the first edge 9A1 of the first tray 9F of the set of trays 91 are aligned vertically with and fixed to one another after actuation thereof.

In the preferred embodiment, the adjustment device is additionally configured for at least adjusting the position of the second edge 9A2 of the last tray 9L of the set of trays 91, said second edge 9A2 being in a specific final position in the positioning area 101 after the adjustment, such that said second edge 9A2 and the second end 20A2 of the film segment 20 are substantially aligned vertically when they are both in their respective final position in the positioning area 101.

In the preferred embodiment, the fixing device comprises at least one additional welder 108.2, similar to the first welder 108.1, suitable for welding at least one point P of the film segment 20 to the last tray 9L for fixing said film segment 20 to said last tray 9L, preferably to the edge or the overlap further upstream in the longitudinal direction MD of said last tray 9L. In the preferred embodiment, since the film segment 20 is separated from the continuous film 2, said film segment 20 is preferably fixed at both transverse ends 20A1 and 20A2 to the set of trays 91 to assure that it remains in place during movement to the sealing station 102 together with said set of trays 91. The film segment 20 preferably remains suctioned to the support surface 109.5 of the head 109.1 at least until the fixing device contacts the film segment 20. To move the film segment 20 and the set of trays 91 to the sealing station 102, said film segment 20 is released from said head 109.1. In this situation, the head 109.1 returns to its original position, and the drive tool 109.0 can now arrange another new film segment 20 under said head 109.1 for the next packaging cycle.

In the preferred embodiment, the introduction tool 103 comprises two opposing arms B shown in Figure 12, which are suitable for being moved in opposite directions transverse to the longitudinal direction MD from an open position PA to a closed position for holding the set of trays 91. In said closed position, the arms B surround the set of trays 91 and introduce it from the positioning area 101 into the sealing station 102; in this situation, both arms B are furthermore suitable for being moved together in the longitudinal direction MD. The arms B are also suitable for performing a substantially vertical movement, and comprises a shape which, when in the closed position, upon generation of the simultaneous vertical movement of both arms B, causes the adjustment of the position of the trays 9 with respect to the final position, said introduction tool acting like an adjustment device: the trays 9 of the set of trays 91 which are arranged in their final position in the positioning area 101 maintain their position when the arms B transition from an open position PA to a closed position, whereas those trays 9 which are not arranged in their final position are moved by said arms B, causing the alignment (the required adjustment) thereof. Each arm B responsible for performing said adjustment preferably comprises one projection ST per tray 9 of the set of trays 91, suitable for contacting the trays 9 when said arms B are being moved vertically, causing with said contact the required adjustment of the position of the trays 9 that are misaligned with respect to the final position.

In the closed position of the arms B, the projections ST are suitable for being arranged at least between a first edge 9A1 and a second edge 9A2 of each tray 9 of the set of trays 91 substantially transverse to the longitudinal direction MD.

Preferably, in a first movement of the arms B from the open position PA to the closed position, the arms B position the trays 9 of the set of trays 91 in an initial adjustment position, wherein each tray 9 is positioned such that its longitudinal axis is substantially parallel to the longitudinal direction MD and said tray 9 is arranged between every two projections ST. However, the vertical movement of the arms B causes at least one projection ST of each arm B to contact at least an edge 9A1 and/or 9A2, or a wall that is not parallel to the longitudinal direction MD, such as, for example, the wall of a rounded edge, of each tray 9 of the set of trays 91 that is not perfectly aligned in the longitudinal direction MD, in the substantially vertical upward movement thereof, so that the position of said trays 9 is adjusted with said contact. The arms B can be configured to enable performing said adjustment of all the trays 9 or of only a few of them, but always of at least the first tray 9F and the last tray 9L of the set of trays 91, said edges 9A1 and 9A2 being in the specific final position in the positioning area 101 after the adjustment, such that the final position of at least said first tray 9F and said last tray 9L in the positioning area 101 corresponds with the relative position occupied by said trays 9F and 9L in the sealing station 102 once the arms B introduce the set of trays 91 into said sealing station 102.

In the preferred embodiment, the sealing station 102 comprises a cutting tool 102.1 for cutting the film segment 20 into as many pieces as there are trays 9, cutting said film segment 20 only between every two adjacent trays 9, individual containers thereby being obtained. The cutting operation can be performed simultaneously with the sealing operation. In other embodiments, the cutting device 109.3 can further comprise a plurality of cutting blades, and is configured for cutting the film segment 20 into a plurality of pieces of film physically separated from one another and from the continuous film 2, upstream of the sealing station 102. The arrangement of the cutting blades is such that the dimensions of the pieces of film substantially correspond with the dimensions of the trays 9 of the set of film 91, a piece of film thereby being obtained for each tray 9, such that in these embodiments a cutting operation does not have to be performed in the sealing station 102, and said sealing station 102 does not comprise a cutting tool.

In the preferred embodiment, the fixing device is attached to the introduction tool 103. This allows performing the required welding during introduction of the set of trays 91 and of the film segment 20 into the sealing station 102. As a result, the productivity of the machine 100 is improved given that while this introduction and/or welding is performed, a new film segment 20 for the next packaging operation can be prepared in parallel.

In the preferred embodiment, the welders 108.1 and 108.2 of the fixing device perform pre-sealing preferably being supported on said introduction tool 103 to perform the pre-sealing, preferably being supported on the projections ST of the arms B, the corresponding trays 9 and the film segment 20 being sandwiched between said introduction tool 103 and said welders 108.1 and 108.2 at that time, such that the film segment 20 is preferably sealed to the edge or overlapping area of said trays 9.

In the preferred embodiment, the welders 108.1 and 108.2 are attached to a corresponding arm B, with freedom of vertical movement with respect to said corresponding arm B. The welders 108.1 and 108.2 are arranged such that in the closed position of the arms B, the welder 108.1 is arranged above the film segment 20 and above the first tray 9F and the welder 108.2 is arranged above the film segment 20 and above the last tray 9L, said welders 108.1 and 108.2 being suitable for performing a vertical movement with respect to the corresponding arm B to contact the film segment 20 and weld it to the corresponding tray 9.

In some embodiments, the machine 100 may further comprise means configured for applying vacuum on the space defined between the film segment 20 and the set of trays 91 in said sealing station 102 (or between each piece of film and its tray 9 of the set of associated trays 91), and/or for injecting gas into said space. This vacuum or injection is furthermore applied through areas between said film segment 20 and said set of trays 91 that are not fixed.

A machine 100 according to the invention is configured to enable implementing the method according to the invention in any of its embodiments and/or configurations and vice versa. In this sense, the machine 100 will comprise the configuration required for implementing the required configuration or embodiment of the method and vice versa. The description of the method is thereby also valid for the corresponding embodiments/configurations of the machine 100, and the description of the machine 100 is thereby also valid for the corresponding embodiments/configurations of the method.

## Claims

1. Method for a packaging machine, comprising a sealing operation carried out in a sealing station (102) of the machine (100), in which a film segment (20) is sealed to a set of trays (91) arranged in the sealing station (102) and comprising at least one row formed by a plurality of trays (9) arranged one after another in a longitudinal direction (MD) of the machine (100), such that individual hermetically sealed containers are generated after the sealing operation, each container comprising a tray (9) and a film cover (90), **characterised in that**, before performing the sealing operation, the method comprises
• arranging the set of trays (91) in a positioning area (101) of the machine (100), the tray (9) further downstream in said longitudinal direction (MD) being the first tray (9F) and the tray (9) further upstream in said longitudinal direction (MD) being the last tray (9L),
• arranging in the positioning area (101) a film segment (20) obtained from a continuous film (2) and comprising specific dimensions, said film segment (20) comprising a first length (20L1) in the longitudinal direction (MD) equal to or greater than the length (L) of the set of trays (91) in said longitudinal direction (MD), and a second length (20L2) in a transverse direction with respect to the longitudinal direction (MD), which is substantially equal to the length (L) of the set of trays (91) in said transverse direction,
• fixing the film segment (20) to at least said first tray (9F) in a fixing operation, and
• after the fixing operation or during said fixing operation, introducing the film segment (20) together with the set of trays (91) into the sealing station (102) in an introduction step.

2. Method according to claim 1, wherein a pre-sealing of at least one point (P) of the film segment (20) to the first tray (9F) is performed in the fixing operation.

3. Method according to claim 2, wherein, in an aligning operation before the fixing step, at least a first end (20A1) of the film segment (20), which is the transverse segment further downstream in the longitudinal direction (MD), and a first edge (9A1) of the first tray (9F) of said set of trays (91), which is the edge of said first tray (9F) further downstream in the longitudinal direction (MD), are aligned with one another, such that the first edge (9A1) of said first tray (9F) and the first end (20A1) of said film segment (20) are substantially aligned vertically with one another, and to that end, there are performed in the aligning operation an arrangement step in which at least the first end (20A1) of the film segment (20) is arranged on the first tray (9F) of the set of trays (91), and an adjustment step in which the position of at least said first tray (9F) is adjusted with respect to at least said first end (20A1) of the film segment (20).

4. Method according to claim 3, wherein before the fixing operation, the film segment (20) is physically separated from the continuous film (2) by means of a cut on said film (2), the film segment (20) being generated physically separated from the rest of the film (2).

5. Method according to claim 4, wherein in the aligning operation, at least the end (20A2) further upstream in the longitudinal direction (MD) of the film segment (20) is additionally arranged on the last tray (9L) of the set of trays (91), and the position of at least said last tray (9L) is adjusted with respect to at least said end (20A2) of the film segment (20), such that the edge (9A2) further upstream in the longitudinal direction (MD) of said last tray (9L) and said end (20A2) of the film segment (20) are substantially aligned vertically with and overlapping one another, and the central axes (91MD, 20MD) of the set of trays (91) and of the film segment (20) extending in the longitudinal direction (MD) are substantially aligned vertically with one another, and wherein in the fixing operation, the film segment (20) is furthermore fixed to the last tray (9L) of the set of trays (91), preferably by means of a pre-sealing of at least one point (P) of the film segment (20) to said last tray (9L).

6. Method according to any of claims 3 to 5, wherein before the introduction step, the film segment (20) is cut into a plurality of pieces of film physically separated from one another and from the continuous film (2), each piece of film being associated with a tray (9) of the set of trays (91) and each piece of film comprising dimensions substantially equal to the dimensions of the associated tray (9), and wherein in the aligning operation, at least the first edge (9A1) of each tray (9) of the set of trays (91) and the end further downstream in the longitudinal direction (MD) of the associated piece of film are aligned with one another, such that the first edge (9A1) of each tray (9) and said end further downstream in the longitudinal direction (MD) of the associated piece of film are substantially aligned vertically with one another, and wherein in the fixing operation, each piece of film is fixed to the associated tray (9) of the set of trays (91), preferably by means of a pre-sealing of at least one point (P) of the piece of film to the corresponding tray (9).

7. Packaging machine comprising
• a sealing station (102) configured for receiving a set of trays (91) comprising at least one row formed by a plurality of trays (9) arranged one after another in a longitudinal direction (MD), for receiving a film segment (20) substantially covering said set of trays (91), and for sealing the film segment (20) to the set of trays (91), individual hermetically sealed containers thereby being generated, each container comprising a tray (9) and a film cover (90), and
• an introduction tool (103) for introducing the set of trays (91) into the sealing station (102) in the longitudinal direction (MD),
**characterised in that** the machine (100) further comprises
• a positioning area (101) upstream of the sealing station (102) where the set of trays (91) is positioned, the tray (9) of the set of trays (91) further downstream in said longitudinal direction (MD) being the first tray (9F) and the tray (9) further upstream in said longitudinal direction (MD) being the last tray (9L),
• a positioning device (109) upstream of the sealing station (102) in the longitudinal direction (MD), which is suitable and configured for positioning a first end (20A1) of the film segment (20), which is the transverse segment further downstream in the longitudinal direction (MD), in a specific final position in the positioning area (101), and
• a fixing device configured for fixing the film segment (20) to at least said first tray (9F) in the positioning area (101), such that the introduction tool (103) introduces the film segment (20) together with the set of trays (91) into the sealing station (102).

8. Packaging machine according to claim 7, wherein the fixing device comprises at least one welder (108.1) suitable for welding at least one point (P) of the film segment (20) to the first tray (9F) for fixing said film segment (20) to said first tray (9F).

9. Packaging machine according to claim 8, wherein the positioning device (109) comprises a drive tool (109.0) and at least one head (109.1), the drive tool (109.0) being configured for moving the continuous film (2) in the longitudinal direction (MD), for arranging the film segment (20) in a first position in the positioning area (101), under the head (109.1), and the head (109.1) being configured for being moved vertically and for arranging, with said movement, the film segment (20) in a second position in said positioning area (101), the first end (20A1) of the film segment (20) being in its final position when said film segment (20) is in said second position.

10. Packaging machine according to claim 9, comprising at least one cutting device (109.3) upstream of the head (109.1) in the longitudinal direction (MD), and a retaining device (109.4) upstream of the cutting device (109.3) in the longitudinal direction (MD), the cutting device (109.3) being configured for cutting the film (2) such that it physically separates the film segment (20) from the continuous film (2), the retaining device (109.4) being configured for holding the end of the continuous film (2) generated after the cut made by said cutting device (109.3).

11. Packaging machine according to claim 10, wherein the drive tool (109.0) comprises a gripper suitable for gripping the first end (20A1) of the film segment (20) downstream of the head (109.1) in the longitudinal direction (MD) and a movement device suitable for longitudinally moving said gripper below the support surface (109.5) in the longitudinal direction (MD) to its first position, the head (109.1) comprising a support surface (109.5) which is arranged opposite the film segment (20) when it is in its first position, and suction means configured for suctioning the film segment (20) against said support surface (109.5) when said film segment (20) is in said first position.

12. Packaging machine according to claim 10 or 11, comprising an adjustment device configured for adjusting the position of at least a first edge (9A1) of the first tray (9F) of the set of trays (91), which is the edge of said first tray (9F) further downstream in the longitudinal direction (MD), said first edge (9A1) being in a specific final position in the positioning area (101) after the adjustment, such that the first edge (9A1) and the first end (20A1) of the film segment (20) are substantially aligned vertically when they are both in their respective final position in the positioning area (101), and a control device configured for causing at least the coordinated actuation of the positioning device (109), the adjustment device, and the fixing device, so that the first end (20A1) of the film segment (20) and the first edge (9A1) of the first tray (9F) are aligned vertically with and fixed to one another after actuation thereof, such that the introduction tool introduces the film segment (20) together with the set of trays (91) into the sealing station (102).

13. Packaging machine according to claim 12, wherein the adjustment device is additionally configured for adjusting the position of at least a second edge (9A2) of the last tray (9L) of the set of trays (91), which is the edge of said last tray (9L) further upstream in the longitudinal direction (MD), said second edge (9A2) being in a specific final position in the positioning area (101) after the adjustment, such that said second edge (9L2) and the second end (20A2) of the film segment (20), which is the transverse segment further upstream in the longitudinal direction (MD) of said film segment (20), are substantially aligned vertically when they are both in their respective final position in the positioning area (101), the fixing device comprising at least one additional welder (108.2) suitable for welding at least one point (P) of the film segment (20) to the last tray (9L) for fixing said film segment (20) to said last tray (9L).

14. Packaging machine according to claim 13, wherein the introduction tool (103) comprises two arms (B) suitable for being moved in opposite directions transverse to the longitudinal direction (MD) from an open position (PA) to a closed position, and for introducing, in the closed position, the set of trays (91) from the positioning area (101) to the sealing station (102), the arms (B) additionally being suitable for performing, in the closed position, a substantially vertical movement, both arms (B) comprising a shape such that the required adjustment of the position of the trays (9) with respect to the final position is performed with said substantially vertical movement, said introduction tool (103) acting like an adjustment device.

15. Packaging machine according to claim 14, comprising at least one welder (108.1) attached with freedom of movement to one of the arms (B), said welder (108.1) being arranged such that, in the closed position of the arms (B), said welder (108.1) is arranged opposite the film segment (20), above a tray (9) of the set of trays (91) and said film segment (20), said welder (108.1) being suitable for performing a vertical movement with respect to the corresponding arm (B) to press the film segment (20) against the tray (9) on which said welder (108.1) is arranged.

## Patentansprüche

1. Verfahren für eine Verpackungsmaschine, umfassend einen Versiegelungsvorgang, welcher in einer Versiegelungsstation (102) der Maschine (100) durchgeführt wird, in welchem ein Foliensegment (20) auf einem Satz von Schalen (91), welche in der Versiegelungsstation (102) angeordnet sind, versiegelt wird, und umfassend mindestens eine Reihe gebildet aus einer Vielzahl von Schalen (9), welche nacheinander in einer Längsrichtung (MD) der Maschine (100) angeordnet sind, sodass einzelne hermetisch versiegelte Behälter nach dem Versiegelungsvorgang erzeugt werden, wobei jeder Behälter eine Schale (9) und eine Folienabdeckung (90) umfasst, **dadurch gekennzeichnet, dass,** bevor der Versiegelungsvorgang durchgeführt wird, das Verfahren Folgendes umfasst
• das Anordnen des Satzes von Schalen (91) in einem Positionierungsbereich (101) der Maschine (100), wobei die Schale (9) weiter stromabwärts in der genannten Längsrichtung (MD) die erste Schale (9F) ist und die Schale (9) weiter stromaufwärts in der genannten Längsrichtung (MD) die letzte Schale (9L) ist,
• das Anordnen im Positionierungsbereich (101) eines Foliensegments (20), welches aus einer durchgehenden Folie (2) erhalten wird und spezifische Abmessungen umfasst, wobei das genannte Foliensegment (20) eine erste Länge (20L1) in der Längsrichtung (MD), welche gleich der oder größer als die Länge (L) des Satzes von Schalen (91) in der genannten Längsrichtung (MD) ist, und eine zweite Länge (20L2) in einer Querrichtung in Bezug auf die Längsrichtung (MD), welche im Wesentlichen gleich der Länge (L) des Satzes von Schalen (91) in der genannten Querrichtung ist, umfasst,
• das Fixieren des Foliensegments (20) an mindestens der genannten ersten Schale (9F) in einem Fixierungsvorgang, und
• nach dem Fixierungsvorgang oder während des genannten Fixierungsvorgangs, das Einführen des Foliensegments (20) zusammen mit dem Satz von Schalen (91) in die Versiegelungsstation (102) in einem Einführungsschritt.

2. Verfahren nach Anspruch 1, wobei eine Vorversiegelung von mindestens einem Punkt (P) des Foliensegments (20) auf der ersten Schale (9F) im Fixierungsvorgang durchgeführt wird.

3. Verfahren nach Anspruch 2, wobei, in einem Ausrichtungsvorgang vor dem Fixierungsschritt, mindestens ein erstes Ende (20A1) des Foliensegments (20), welches das Quersegment weiter stromabwärts in der Längsrichtung (MD) ist, und ein erster Rand (9A1) der ersten Schale (9F) des genannten Satzes von Schalen (91), welcher der Rand der genannten ersten Schale (9F) weiter stromabwärts in der Längsrichtung (MD) ist, aufeinander ausgerichtet sind, sodass der erste Rand (9A1) der genannten ersten Schale (9F) und das erste Ende (20A1) des genannten Foliensegments (20) im Wesentlichen vertikal aufeinander ausgerichtet sind, und zu diesem Zweck, im Ausrichtungsvorgang ein Anordnungsschritt, in welchem mindestens das erste Ende (20A1) des Foliensegments (20) auf der ersten Schale (9F) des Satzes von Schalen (91) angeordnet wird, und ein Einstellungsschritt, in welchem die Position mindestens der genannten ersten Schale (9F) in Bezug auf mindestens das genannte erste Ende (20A1) des Foliensegments (20) eingestellt wird, durchgeführt werden.

4. Verfahren nach Anspruch 3, wobei, vor dem Fixierungsvorgang, das Foliensegment (20) von der durchgehenden Folie (2) mittels eines Schnittes auf der genannten Folie (2) physikalisch getrennt wird, wobei das Foliensegment (20) vom Rest der Folie (2) physikalisch getrennt erzeugt wird.

5. Verfahren nach Anspruch 4, wobei im Ausrichtungsvorgang, mindestens das Ende (20A2) weiter stromaufwärts in der Längsrichtung (MD) des Foliensegments (20) zusätzlich auf der letzten Schale (9L) des Satzes von Schalen (91) angeordnet wird, und die Position mindestens der genannten letzten Schale (9L) in Bezug auf mindestens das genannte Ende (20A2) des Foliensegments (20) eingestellt wird, sodass der Rand (9A2) weiter stromaufwärts in der Längsrichtung (MD) der genannten letzten Schale (9L) und das genannte Ende (20A2) des Foliensegments (20) im Wesentlichen vertikal aufeinander und einander überlappend ausgerichtet sind, und die Mittelachsen (91MD, 20MD) des Satzes von Schalen (91) und des Foliensegments (20), welche sich in der Längsrichtung (MD) erstrecken, im Wesentlichen vertikal aufeinander ausgerichtet sind, und wobei im Fixierungsvorgang, das Foliensegment (20) ferner an der letzten Schale (9L) des Satzes von Schalen (91), vorzugsweise mittels einer Vorversiegelung von mindestens einem Punkt (P) des Foliensegments (20) an der genannten letzten Schale (9L), fixiert wird.

6. Verfahren nach einem der Ansprüche 3 bis 5, wobei, vor dem Einführungsschritt, das Foliensegment (20) in eine Vielzahl von Folienstücken geschnitten wird, welche physikalisch voneinander und von der durchgehenden Folie (2) getrennt sind, wobei jedes Folienstück mit einer Schale (9) des Satzes von Schalen (91) assoziiert ist und jedes Folienstück Abmessungen umfasst, welche im Wesentlichen gleich der Abmessungen der assoziierten Schale (9) sind, und wobei, im Ausrichtungsvorgang, mindestens der erste Rand (9A1) jeder Schale (9) des Satzes von Schalen (91) und das Ende weiter stromabwärts in der Längsrichtung (MD) des assoziierten Folienstücks aufeinander ausgerichtet sind, sodass der erste Rand (9A1) jeder Schale (9) und das genannte Ende weiter stromabwärts in der Längsrichtung (MD) des assoziierten Folienstücks im Wesentlichen vertikal aufeinander ausgerichtet sind, und wobei, im Fixierungsvorgang, jedes Folienstück an der assoziierten Schale (9) des Satzes von Schalen (91), vorzugsweise mittels einer Vorversiegelung von mindestens einem Punkt (P) des Folienstücks auf der entsprechenden Schale (9), fixiert wird.

7. Verpackungsmaschine umfassend
• eine Versiegelungsstation (102), welche dazu ausgebildet ist, einen Satz von Schalen (91) umfassend mindestens eine Reihe gebildet aus einer Vielzahl von Schalen (9), welche nacheinander in einer Längsrichtung (MD) angeordnet sind, aufzunehmen, ein Foliensegment (20), welches im Wesentlichen den genannten Satz von Schalen (91) abdeckt, aufzunehmen, und das Foliensegment (20) auf dem Satz von Schalen (91) zu versiegeln, wobei dadurch einzelne hermetisch versiegelte Behälter erzeugt werden, wobei jeder Behälter eine Schale (9) und eine Folienabdeckung (90) umfasst, und
• ein Einführungswerkzeug (103) zum Einführen des Satzes von Schalen (91) in die Versiegelungsstation (102) in der Längsrichtung (MD),
**dadurch gekennzeichnet, dass** die Maschine (100) zusätzlich Folgendes umfasst
• einen Positionierungsbereich (101) stromaufwärts der Versiegelungsstation (102), in welcher der Satz von Schalen (91) positioniert ist, wobei die Schale (9) des Satzes von Schalen (91) weiter stromabwärts in der genannten Längsrichtung (MD) die erste Schale (9F) ist und die Schale (9) weiter stromaufwärts in der genannten Längsrichtung (MD) die letzte Schale (9L) ist,
• eine Positionierungsvorrichtung (109) stromaufwärts der Versiegelungsstation (102) in der Längsrichtung (MD), welche geeignet und dazu ausgebildet ist, ein erstes Ende (20A1) des Foliensegments (20), welches das Quersegment weiter stromabwärts in der Längsrichtung (MD) ist, in einer spezifischen Endposition im Positionierungsbereich (101) zu positionieren, und
• eine Fixierungsvorrichtung, welche dazu ausgebildet ist, das Foliensegment (20) an mindestens der genannten ersten Schale (9F) im Positionierungsbereich (101) zu fixieren, sodass das Einführungswerkzeug (103) das Foliensegment (20) zusammen mit dem Satz von Schalen (91) in die Versiegelungsstation (102) einführt.

8. Verpackungsmaschine nach Anspruch 7, wobei die Fixierungsvorrichtung mindestens einen Schweißer (108.1) umfasst, welcher geeignet ist, mindestens einen Punkt (P) des Foliensegments (20) auf der ersten Schale (9F) zu schweißen, um das genannte Foliensegment (20) an der genannten ersten Schale (9F) zu fixieren.

9. Verpackungsmaschine nach Anspruch 8, wobei die Positionierungsvorrichtung (109) ein Antriebswerkzeug (109.0) und mindestens einen Kopf (109.1) umfasst, wobei das Antriebswerkzeug (109.0) dazu ausgebildet ist, die durchgehende Folie (2) in der Längsrichtung (MD) zu bewegen, das Foliensegment (20) in einer ersten Position im Positionierungsbereich (101), unter dem Kopf (109.1), anzuordnen, und wobei der Kopf (109.1) dazu ausgebildet ist, vertikal bewegt zu werden und, mit der genannten Bewegung, das Foliensegment (20) in einer zweiten Position im genannten Positionierungsbereich (101) anzuordnen, wobei das erste Ende (20A1) des Foliensegments (20) in dessen Endposition ist, wenn das genannte Foliensegment (20) in der genannten zweiten Position ist.

10. Verpackungsmaschine nach Anspruch 9, umfassend mindestens eine Schneidevorrichtung (109.3) stromaufwärts des Kopfes (109.1) in der Längsrichtung (MD), und eine Haltevorrichtung (109.4) stromaufwärts der Schneidevorrichtung (109.3) in der Längsrichtung (MD), wobei die Schneidevorrichtung (109.3) dazu ausgebildet ist, die Folie (2) zu schneiden, sodass sie das Foliensegment (20) physikalisch von der durchgehenden Folie (2) trennt, wobei die Haltevorrichtung (109.4) dazu ausgebildet ist, das Ende der durchgehenden Folie (2), welches nach dem von der genannten Schneidevorrichtung (109.3) gemachten Schnitt erzeugt wurde, zu halten.

11. Verpackungsmaschine nach Anspruch 10, wobei das Antriebswerkzeug (109.0) einen Greifer, welcher geeignet ist, das erste Ende (20A1) des Foliensegments (20) stromabwärts des Kopfes (109.1) in der Längsrichtung (MD) zu greifen, und eine Bewegungsvorrichtung, welche geeignet ist, den genannten Greifer unter der Stützfläche (109.5) in der Längsrichtung (MD) in dessen erste Position längs zu bewegen, umfasst, wobei der Kopf (109.1) eine Stützfläche (109.5), welche dem Foliensegment (20) gegenüberliegend angeordnet ist, wenn es in dessen ersten Position ist, und Saugmittel, welche dazu ausgebildet sind, das Foliensegment (20) gegen die genannte Stützfläche (109.5) zu saugen, wenn das genannte Foliensegment (20) in der genannten ersten Position ist, umfasst.

12. Verpackungsmaschine nach Anspruch 10 oder 11, umfassend eine Einstellungsvorrichtung, welche dazu ausgebildet ist, die Position mindestens eines ersten Randes (9A1) der ersten Schale (9F) des Satzes von Schalen (91), welcher der Rand der genannten ersten Schale (9F) weiter stromabwärts in der Längsrichtung (MD) ist, einzustellen, wobei der genannte erste Rand (9A1) in einer spezifischen Endposition im Positionierungsbereich (101) nach der Einstellung ist, sodass der erste Rand (9A1) und das erste Ende (20A1) des Foliensegments (20) im Wesentlichen vertikal ausgerichtet sind, wenn beide in deren jeweiligen Endposition im Positionierungsbereich (101) sind, und eine Steuervorrichtung, welche dazu ausgebildet ist, mindestens die koordinierte Betätigung der Positionierungsvorrichtung (109), der Einstellungsvorrichtung und der Fixierungsvorrichtung zu bewirken, sodass das erste Ende (20A1) des Foliensegments (20) und der erste Rand (9A1) der ersten Schale (9F) nach der Betätigung derselben vertikal aufeinander ausgerichtet und aneinander fixiert sind, sodass das Einführungswerkzeug das Foliensegment (20) zusammen mit dem Satz von Schalen (91) in die Versiegelungsstation (102) einführt.

13. Verpackungsmaschine nach Anspruch 12, wobei die Einstellungsvorrichtung zusätzlich dazu ausgebildet ist, die Position mindestens eines zweiten Randes (9A2) der letzten Schale (9L) des Satzes von Schalen (91), welcher der Rand der genannten letzten Schale (9L) weiter stromaufwärts in der Längsrichtung (MD) ist, einzustellen, wobei der genannte zweite Rand (9A2) in einer spezifischen Endposition im Positionierungsbereich (101) nach der Einstellung ist, sodass der genannte zweite Rand (9L2) und das zweite Ende (20A2) des Foliensegments (20), welches das Quersegment weiter stromaufwärts in der Längsrichtung (MD) des genannten Foliensegments (20) ist, im Wesentlichen vertikal ausgerichtet sind, wenn beide in deren jeweilige Endposition im Positionierungsbereich (101) sind, wobei die Fixierungsvorrichtung mindestens einen zusätzlichen Schweißer (108.2) umfasst, welcher geeignet ist, mindestens einen Punkt (P) des Foliensegments (20) auf der letzten Schale (9L) zu schweißen, um das genannte Foliensegment (20) an der genannten letzten Schale (9L) zu fixieren.

14. Verpackungsmaschine nach Anspruch 13, wobei das Einführungswerkzeug (103) zwei Arme (B) umfasst, welche geeignet sind, in entgegengesetzte Richtungen quer zur Längsrichtung (MD) von einer offenen Position (PA) in eine geschlossene Position bewegt zu werden, und, in der geschlossenen Position, den Satz von Schalen (91) aus dem Positionierungsbereich (101) in die Versiegelungsstation (102) einzuführen, wobei die Arme (B) zusätzlich geeignet sind, in der geschlossenen Position, eine im Wesentlichen vertikale Bewegung durchzuführen, wobei beide Arme (B) eine Gestalt umfassen, sodass die benötigte Einstellung der Position der Schalen (9) in Bezug auf die Endposition mit der genannten im Wesentlichen vertikalen Bewegung durchgeführt wird, wobei das genannte Einführungswerkzeug (103) wie eine Einstellungsvorrichtung agiert.

15. Verpackungsmaschine nach Anspruch 14, umfassend mindestens einen Schweißer (108.1), welcher mit Bewegungsfreiheit an einem der Arme (B) befestigt ist, wobei der genannte Schweißer (108.1) derart angeordnet ist, dass, in der geschlossenen Position der Arme (B), der genannte Schweißer (108.1) dem Foliensegment (20) gegenüberliegend, über einer Schale (9) des Satzes von Schalen (91) und dem genannten Foliensegment (20), angeordnet ist, wobei der genannte Schweißer (108.1) geeignet ist, eine vertikale Bewegung in Bezug auf den entsprechenden Arm (B) durchzuführen, um das Foliensegment (20) gegen die Schale (9) zu drücken, auf welcher der genannte Schweißer (108.1) angeordnet ist.

## Revendications

1. Procédé pour une machine d'emballage, comprenant une opération de scellage effectuée dans un poste de scellage (102) de la machine (100), dans lequel un segment de film (20) est scellé à un ensemble de plateaux (91) aménagés dans le poste de scellage (102) et comprenant au moins une rangée composée d'une pluralité de plateaux (9) aménagés l'un après l'autre dans une direction longitudinale (MD) de la machine (100) de manière que des conteneurs individuels scellés hermétiquement sont générés après l'opération de scellage, chaque conteneur comprenant un plateau (9) et une couverture de film (90), **caractérisé en ce que,** avant de réaliser l'opération de scellage, le procédé comprend :
• aménager l'ensemble de plateaux (91) dans une zone de positionnement (10) de la machine (100), le plateau (9) le plus en aval dans ladite direction longitudinale (MD) étant le premier plateau (9F) et le plateau (9) le plus en amont dans ladite direction (MD) étant le dernier plateau (9L),
• aménager dans la zone de positionnement (101) un segment de film (20) obtenu à partir d'un film continu (2) et comprenant des dimensions spécifiques, ledit segment de film (20) comprenant une première longueur (20L1) dans la direction longitudinale (MD) égale ou supérieure à la longueur (L) de l'ensemble de plateaux (91) dans ladite direction longitudinale (MD), et une seconde longueur (20L2) dans une direction transversale par rapport à la direction longitudinale (MD), qui es essentiellement égale à la longueur (L) de l'ensemble de plateaux (91) dans ladite direction transversale,
• fixer le segment de film (20) à au moins ledit premier plateau (9F) dans une opération de fixation, et
• après l'opération de fixation ou pendant ladite opération de fixation, introduire le segment de film (20) conjointement avec l'ensemble de plateaux (91) dans le poste de scellage (102) une étape d'introduction.

2. Procédé selon la revendication 1, dans lequel un pré-scellage d'au moins un point (P) du segment de film (20) au premier plateau (9F) est effectué lors de l'opération de fixation.

3. Procédé selon la revendication 2, dans lequel, dans une opération d'alignement avant l'étape de fixation, au moins une première extrémité (20A1) du segment de film (20), qui est le segment transversale le plus en aval dans la direction longitudinale (MD), et un premier bord (9A1) du premier plateau (9F) dudit ensemble de plateaux (91), qui est le bord dudit premier plateau (9F) le plus en aval dans la direction longitudinale (MD), sont alignés entre eux, de manière que le premier bord (9A1) dudit premier plateau (9F) et la première extrémité (20A1) dudit segment de film (20) sont essentiellement alignés en vertical entre eux, et à cette fin, il est effectué lors de l'opération d'alignement une étape d'aménagement dans laquelle au moins la première extrémité (20A1) du segment de film (20) est aménagée sur le premier plateau (9F) de l'ensemble de plateaux (91), et une étape d'ajustement dans laquelle la position d'au moins ledit premier plateau (9F) est ajustée par rapport à au moins ladite première extrémité (20A1) du segment de film (20).

4. Procédé selon la revendication 3, dans lequel avant l'opération de fixation, le segment de film (20) est séparé physiquement du film continu (2) par le biais d'une coupure sur ledit film (2), le segment de film (20) étant généré physiquement séparé du reste du film (2).

5. Procédé selon la revendication 4, dans lequel dans l'opération d'alignement, au moins l'extrémité (20A2) la plus en amont dans la direction longitudinale (MD) du segment de film (20) est aménagée en outre sur le dernier plateau (9L) de l'ensemble de plateaux (91), et la position d'au moins ledit dernier plateau (9L) est ajustée par rapport à au moins ladite extrémité (20A2) du segment de film (20), de manière que le bord (9A2) le plus en amont dans la direction longitudinale (MD) dudit dernier plateau (9L) et ladite extrémité (20A2) du segment de film (20) sont essentiellement alignés en vertical entre eux et en se chevauchant entre eux, et les axes centraux (91MD, 20MD) de l'ensemble de plateaux (91) et du segment de film (20) s'étendant dans la direction longitudinale (MD) sont essentiellement alignés en vertical entre eux, et dans lequel lors de l'opération de fixation, le segment de film (20) est en outre fixé au dernier plateau (9L) de l'ensemble de plateaux (91), de préférence par le biais d'un pré-scellage d'au moins un point (P) du segment de film (20) audit dernier plateau (9L).

6. Procédé selon l'une quelconque des revendication 3 à 5, dans lequel avant l'étape d'introduction, le segment de film (20) est coupé en une pluralité de pièces de film séparées physiquement les unes des autres et du film continu (20), chaque pièce de film étant associée à un plateau (9) de l'ensemble de plateaux (91) et chaque pièce de film comprenant des dimensions essentiellement égales aux dimensions du plateau associé (9), et dans lequel lors de l'opération d'alignement, au moins le premier bord (9A1) de chaque plateau (9) de l'ensemble de plateaux (91) et l'extrémité la plus en aval dans la direction longitudinale (MD) de la pièce associée du film sont alignés entre eux, de manière que le premier bord (9A1) de chaque plateau (9) et ladite extrémité la plus en aval dans la direction longitudinale (MD) de la pièce associée du film sont essentiellement alignés en vertical entre eux, et dans lequel lors de l'opération de fixation, chaque pièce de film est fixée au plateau associé (9) de l'ensemble de plateaux (91), de préférence par le biais d'un pré-scellage d'au moins un point (P) de la pièce de film au plateau correspondant (9).

7. Machine d'emballage comprenant :
• un poste de scellage (102) configuré pour recevoir un ensemble de plateaux (91) comprenant au moins au moins une rangée composée d'une pluralité de plateaux (9) aménagés l'un après l'autre dans une direction longitudinale (MD), pour recevoir un segment de film (20) recouvrant essentiellement ledit ensemble de plateaux (91), et pour sceller le segment de film (20) à l'ensemble de plateaux (91), des conteneurs individuels scellés hermétiquement étant ainsi générés, chaque conteneur comprenant un plateau (9) et une couverture de film (90) et
• un outil d'introduction (103) pour introduire l'ensemble de plateaux (91) dans le poste de scellage (102) dans la direction longitudinale (MD),
**caractérisée en ce que** la machine (100) comprend en outre :
• une zone de positionnement (10) en amont du poste de scellage (102) où l'ensemble de plateaux (91) est positionné, le plateau (9) de l'ensemble de plateaux (91) le plus en aval dans ladite direction longitudinale (MD) étant le premier plateau (9F) et le plateau (9) le plus en amont dans ladite direction longitudinale (MD) étant le dernier plateau (9L),
• un dispositif de positionnement (109) en amont du poste de scellage (102) dans la direction longitudinale (MD), qui est approprié et configuré pour positionner la première extrémité (20A1) du segment de film (20), qui est le segment transversal le plus en aval dans la direction longitudinale (MD), dans une position finale spécifique dans la zone de positionnement (101), et
• un dispositif de fixation configuré pour fixer le segment de film (20) à au moins ledit premier plateau (9F) dans la zone de positionnement (101) de manière que l'outil d'introduction (103) introduit le segment de film (20) conjointement avec l'ensemble de plateaux (91) dans le poste de scellage (102).

8. Machine d'emballage selon la revendication 7, dans laquelle le dispositif de fixation comprend au moins un soudeur (108.1) approprié pour souder au moins un point (P) du segment de film (20) au premier plateau (9F) pour fixer ledit segment de film (20) audit premier plateau (9F).

9. Machine d'emballage selon la revendication 8, dans laquelle le dispositif de positionnement (109) comprend un outil d'entraînement (109.0) et au moins une tête (109.1), l'outil d'entraînement (109.0) étant configuré pour déplacer le film continu (2) dans la direction longitudinale (MD), pour aménager le segment de film (20) dans une première position dans la zone de positionnement (101), sous la tête (109.1), et la tête (109.1) étant configurée pour être déplacée verticalement et pour aménager, avec ledit déplacement, le segment de film (20) dans une seconde position dans ladite zone de positionnement (101), la première extrémité (20A1) du segment de film (20) étant dans sa position finale lorsque ledit segment de film (20) est dans ladite seconde position.

10. Machine d'emballage selon la revendication 9, comprenant au moins un dispositif de coupe (109.3) en amont de la tête (109.1) dans la direction longitudinale (MD), et un dispositif de retenue (109.4) en amont du dispositif de coupe (109.3) dans la direction longitudinale (MD), le dispositif de coupe (109.3) étant configuré pour couper le film (2) de manière qu'il sépare physiquement le segment de film (20) du film continu (2), le dispositif de retenue (109.4) étant configuré pour maintenir l'extrémité du film continu (2) généré après la coupe réalisée par ledit dispositif de coupe (109.3).

11. Machine d'emballage selon la revendication 10, dans laquelle l'outil d'entraînement (109.0) comprend un élément de saisie approprié pour saisir la première extrémité (20A1) du segment de film (20) en aval de la tête (109.1) dans la direction longitudinale (MD) et un dispositif de déplacement approprié pour déplacer longitudinalement ledit élément de saisie sous la surface d'appui (109.5) dans la direction longitudinale (MD) jusqu'à sa première position, la tête (109.1) comprenant une surface d'appui (109.5) qui est aménagée en regard du segment de film (20) lorsqu'il est dans sa première position, et des moyens d'aspiration configurés pour aspirer le segment de film (20) contre ladite surface d'appui (109.5) lorsque ledit segment de film (20) est dans sa première position.

12. Machine d'emballage selon la revendication 10 ou 11, comprenant un dispositif d'ajustement configuré pour ajuster la position d'au moins un premier bord (9A1) du premier plateau (9F) de l'ensemble de plateaux (91), qui est le bord dudit premier plateau (9F) le plus en aval dans la direction longitudinale (MD), ledit premier bord (9A1) étant dans une position finale spécifique dans la zone de positionnement (101) après l'ajustement, de manière que le premier bord (9A1) et la première extrémité (20A1) du segment de film (20) sont essentiellement alignés en vertical lorsque les deux sont dans leur position finale respective dans la zone de positionnement (101), et un dispositif de commande configuré pour produire au moins l'actionnement coordonné du dispositif de positionnement (109), le dispositif d'ajustement et le dispositif de fixation, de manière que la première extrémité (20A1) du segment de film (20) et le premier bord (9A1) du premier plateau (9F) sont alignés en vertical entre eux et fixés entre eux après leur actionnement, de manière que l'outil d'introduction introduit le segment de film (20) conjointement avec l'ensemble de plateaux (91) dans le poste de scellage (102).

13. Machine d'emballage selon la revendication 12, dans laquelle le dispositif d'ajustement est configuré en outre pour ajuster la position d'au moins un second bord (9A2) du dernier plateau (9L) de l'ensemble de plateaux (91), qui est le bord dudit dernier plateau (9L) le plus en amont dans la direction longitudinale (MD), ledit second bord (9A2) étant dans une position finale spécifique dans la zone de positionnement (101) après l'ajustement, de manière que ledit second bord (9L2) et la seconde extrémité (20A2) du segment de film (20), qui est le segment transversal le plus en amont dans la direction longitudinale (MD) dudit segment de film (20), sont essentiellement alignés en vertical lorsqu'ils sont tous deux dans leur position finale respective dans la zone de positionnement (101), le dispositif de fixation comprenant au moins un soudeur supplémentaire (108.2) approprié pour souder au moins un point (P) du segment de film (20) au dernier plateau (9L) pour fixer ledit segment de film (20) audit dernier plateau (9L).

14. Machine d'emballage selon la revendication 13, dans laquelle l'outil d'introduction (103) comprend deux bras (B) appropriés pour être déplacés dans des directions opposées transversales à la direction longitudinale (MD) d'une position ouverte (PA) à une position fermée, et pour introduire, dans la position fermée, l'ensemble de plateaux (91) de la zone de positionnement (101) au poste de scellage (102), les bras (B) étant en outre appropriés pour effectuer, dans la position fermée, un déplacement essentiellement vertical, les deux bras (B) comprenant une telle forme que l'ajustement requis de la position des plateaux (9) par rapport à la position finale est effectué par ledit déplacement essentiellement vertical, ledit outil d'introduction (103) agissant comme un dispositif d'ajustement.

15. Machine d'emballage selon la revendication 14, comprenant au moins un soudeur (108.1) fixé avec liberté de mouvement à l'un des bras (B), ledit soudeur (108.1) étant aménagé de manière que, dans la position fermée des bras (B), ledit soudeur (108.1) est aménagé en regard du segment de film (20) au-dessus d'un plateau (9) de l'ensemble de plateaux (91) et ledit segment de film (20), ledit soudeur (108.1) étant approprié pour effectuer un déplacement vertical par rapport au bras correspondant (B) pour presser le segment de film (20) contre le plateau (9) sur lequel est aménagé ledit soudeur (108.1).
